**Europäisches Patentamt**

**European Patent Office**

**Office européen des brevets**

(19)

(11) Numéro de publication : **0 165 186**
**B1**

(12) **FASCICULE DE BREVET EUROPÉEN**

(45) Date de publication du fascicule du brevet :
**03.01.90**

(21) Numéro de dépôt : **85420093.8**

(22) Date de dépôt : **15.05.85**

(51) Int. Cl.⁵ : **F 16 K  5/20, F 16 K 39/06**

(54) **Robinet à boisseau tournant sphérique.**

(30) Priorité : **18.05.84 FR 8408177**

(43) Date de publication de la demande :
**18.12.85 Bulletin 85/51**

(45) Mention de la délivrance du brevet :
**03.01.90 Bulletin 90/01**

(84) Etats contractants désignés :
**AT BE CH DE GB IT LI LU NL SE**

(56) Documents cités :
**FR-A-  859 489**
**FR-A- 1 341 251**
**FR-A- 2 325 868**
**US-A- 3 020 019**
**US-A- 3 408 037**
**US-A- 4 254 793**

(73) Titulaire : **VANATOME**
**7, rue Vidal**
**F-07100 Annonay (FR)**

(72) Inventeur : **Martin, Roger**
**Route de Colombier**
**F-07100 Saint Cyr (FR)**
Inventeur : **Buffa, Laurent**
**Clair Logis Vissenty**
**F-07100 Annonay (FR)**

(74) Mandataire : **Maureau, Philippe et al**
**Cabinet Germain & Maureau Le Britannia - Tour C 20,**
**bld Eugène Déruelle Boîte Postale 3011**
**F-69392 Lyon Cédex 03 (FR)**

Jouve, 18, rue St-Denis, 75001 Paris, France

## Description

La présente invention a pour objet un robinet à boisseau tournant sphérique.

Les robinets à boisseau sphérique sont des appareils permettant de sectionner une veine fluide. Ils présentent l'avantage de pouvoir être manœuvrés rapidement, d'être très compacts, et d'assurer un passage sans rupture de la veine fluide, évitant donc les turbulences et les bruits qui en résultent.

Il existe deux types de robinets à boisseau sphérique.

Le premier type concerne les robinets dits à boule flottante, qui sont destinés plus spécialement à équiper des installations travaillant sous basse pression, et/ou sont réservés à des appareils de petites dimensions. Dans un tel robinet, lors du mouvement de rotation du boisseau vers sa position de fermeture, celui-ci est susceptible d'un léger mouvement de translation dans le sens d'écoulement de la veine fluide, assurant ainsi son plaquage avec étanchéité sur un siège aval.

Le second type concerne des robinets dits à boule ou à boisseau arbré. Ces appareils sont destinés à l'équipement d'installations travaillant sous de hautes pressions et/ou de dimensions plus importantes que précédemment. Dans ce dernier cas, le boisseau pivote uniquement autour d'un axe correspondant à celui de la tige de commande, l'étanchéité étant obtenue par un siège mobile qui, disposé en amont du boisseau, vient se plaquer contre celui-ci, lorsqu'il est en position de fermeture, du fait que sa section du côté amont est supérieure à sa section du côté aval où il prend appui contre le boisseau.

L'étanchéité entre le siège et le boisseau est obtenue à l'aide de joints en élastomère ou similaire.

Compte-tenu des bons coefficients de frottement de ces joints, il est possible de manœuvrer facilement le boisseau en vue de l'ouverture du robinet, malgré la force d'appui du siège sur le boisseau, due à l'importance de la différence des pressions entre l'amont et l'aval du boisseau en position fermée du robinet.

Toutefois, l'utilisation d'une telle technologie est limitée par la tenue en température des joints utilisés (150 à 200 °C maximum).

Le document FR-A-1 341 251 concerne un robinet à obturateur pivotant et dont le siège est fixé. L'obturateur est équipé de moyens susceptibles d'assurer une étanchéité vis-à-vis du siège, sous l'action de la pression du fluide.

Le document US-A-3 020 019 concerne un robinet dont le siège est fixé et dont l'obturateur flottant est déplaçable sous l'effet de la pression.

La présente invention vise à remédier à ces inconvénients en fournissant un robinet à boisseau sphérique, du type à boisseau arbré dans lequel l'étanchéité est réalisée par appui d'un siège déplaçable dans la direction de la veine fluide, disposé en amont du boisseau, et susceptible de travailler à de hautes températures et sous de fortes pressions. Le but de l'invention est de fournir un robinet qui possède une excellente étanchéité en position de fermeture, et qui puisse être manœuvrée facilement, sans détérioration des pièces en contact assurant l'étanchéité.

Selon la caractéristique essentielle de l'invention, l'extrémité du siège amont prenant appui sur le boisseau comporte une lèvre métallique déformable élastiquement, des moyens étant prévus, susceptibles d'assurer un équilibrage de la pression, de part et d'autre du siège préalablement à l'ouverture du robinet, et la section de passage de la zone d'appui du siège aval sur le boisseau est inférieure à la section de passage de la zone d'appui du siège amont sur celui-ci.

D'un point de vue pratique, lors de la fermeture du robinet, la pression de fluide régnant à l'intérieur du tronçon de soufflet et s'exerçant sur la collerette du siège, provoque le déplacement du siège dans le sens d'écoulement de la veine fluide avec appui contre le boisseau, se traduisant par une déformation élastique de la lèvre du siège assurant un contact étanche entre le boisseau et le siège.

La nature des matériaux utilisés pour réaliser cette étanchéité permet de travailler à haute température et sous de fortes pressions. Toutefois, compte-tenu de l'appui métal sur métal des éléments en contact du boisseau et du siège, et de la différence de pression entre l'amont et l'aval du boisseau, le mouvement d'ouverture du robinet se traduirait par un grippage des deux pièces l'une sur l'autre.

Cet inconvénient est évité par mise en œuvre des moyens indiqués précédemment qui assurent un équilibrage des pressions de part et d'autre du siège, préalablement à la manœuvre d'ouverture du boisseau. Du fait de l'équilibrage des pressions, le siège réoccupe une position « flottante » permettant la manœuvre du boisseau vers la position d'ouverture.

Selon une forme d'exécution de ce robinet, les moyens assurant l'équilibrage de la pression de part et d'autre du siège, préalablement à l'ouverture du robinet, sont constitués par un conduit de by-pass qui, débouchant d'une part dans la veine fluide en amont du siège coulissant, et d'autre part dans la chambre ménagée entre le corps et le siège, est équipé d'un robinet de fermeture.

Le robinet du by-pass est en position fermée lorsque le robinet principal est en position fermée. Ce n'est que préalablement à l'ouverture du robinet principal que le robinet de by-pass est ouvert pour réaliser un équilibrage des pressions de part et d'autre du siège amont.

Afin d'éviter à ce moment un débit de fuite important du côté aval du boisseau, le robinet est équipé d'un siège aval comprenant des éléments en graphite maintenus en appui élastique contre le boisseau par un élément en forme de tore métallique ouvert sur l'extérieur. Il est en effet important de limiter le débit de fuite, afin de procurer un équilibrage aussi bon que possible des pressions entre l'amont et l'aval du siège amont.

En outre, compte-tenu des sections de passage respectives des sièges en amont et en aval du boisseau, il se produit tout d'abord un sectionnement total de la veine fluide sur le siège aval alors que la fermeture n'est pas encore complète sur le siège amont, ce qui permet d'effectuer la fin de la manœuvre de fermeture sans différence de pression sur le siège métallique amont.

Conformément à une variante d'exécution de ce robinet, le boisseau comprend une lèvre métallique déformable destinée à venir prendre appui contre la lèvre déformable du siège amont.

De toute façon, l'invention sera bien comprise à l'aide de la description qui suit, en référence au dessin schématique annexé représentant, à titre d'exemples non limitatifs, deux formes d'exécution de ce robinet :

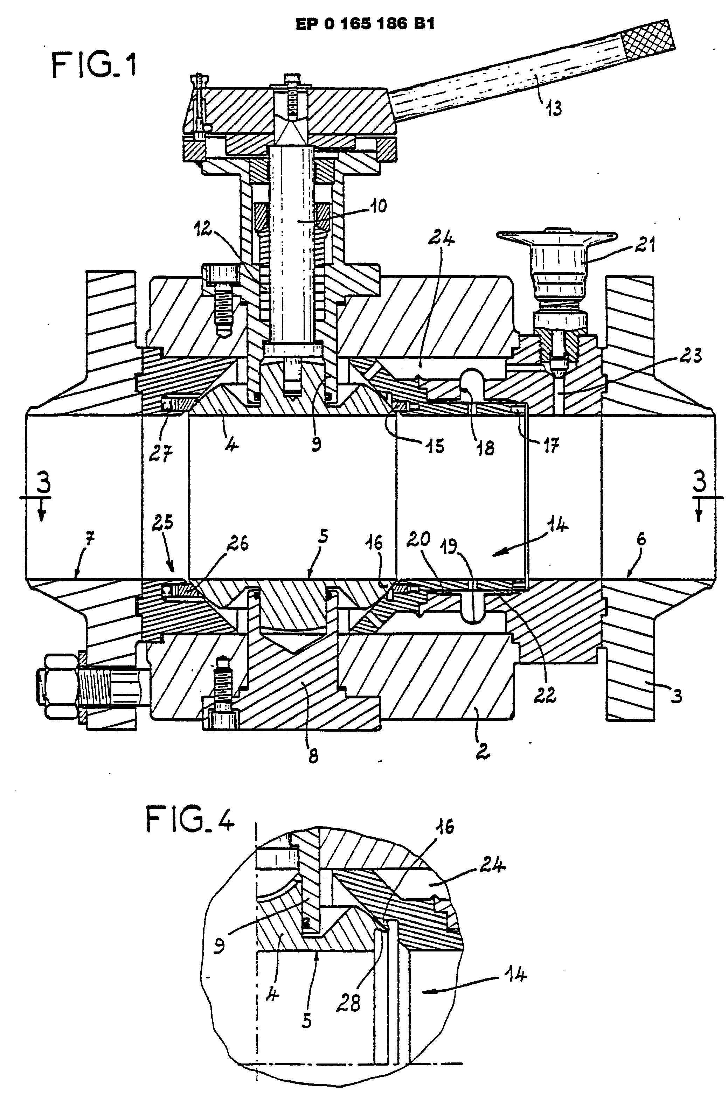

Figure 1 est une vue en coupe longitudinale d'un premier robinet en position ouverte ;

Figure 2 est une vue de détail du robinet de figure 1 en position ouverte ;

Figure 3 est une vue en coupe longitudinale de ce robinet selon la ligne 3-3 de figure 1, au cours de sa fermeture ;

Figure 4 est une vue de détail en coupe longitudinale et à échelle agrandie d'une variante de ce robinet dans lequel le boisseau est modifié.

Le robinet principal, représenté au dessin, comprend un corps 2 sur lequel sont raccordées, à l'aide de brides 3, des tubulures servant au transport d'un fluide. A l'intérieur du corps 2 est disposé un boisseau sphérique 4 comprenant un passage central 5 de section correspondant à la section de la veine fluide dans ses zones amont 6 et aval 7. Le boisseau 4 est monté pivotant dans des paliers 8, 9 autour d'un axe perpendiculaire à la direction de la veine fluide. L'actionnement du boisseau est réalisé par l'intermédiaire d'une tige de commande 10 traversant le corps 2 avec interposition de garnitures d'étanchéité 12, et actionnable par un levier 13. En amont du boisseau 4 est disposé un siège 14 ménageant pour le fluide une section de passage correspondant à celle des zones 6 et 7. De façon connue, ce siège est monté mobile dans la direction de la veine fluide. Il comporte à son extrémité située du côté du boisseau (4) un joint racleur (15) ainsi qu'une lèvre métallique (16) déformable lorsqu'elle est en appui sous une certaine pression contre le boisseau (4). Cet appui du siège (14) contre le boisseau (4) est réalisé par une série de ressorts (17) agissant sur l'extrémité amont du siège et réalisant une étanchéité à basse pression. L'essentiel de l'appui du siège contre le boisseau résulte de la pression exercée par le fluide sur un tronçon de soufflet métallique (19) soudé en (20 et 22), respectivement sur le siège (14) et sur le corps (2) et dont la section est supérieure à la section d'étanchéité du siège sur le boisseau. Ce tronçon de soufflet (19) transmet la pression de fluide à une partie (18) du siège en forme de collerette.

En outre, le robinet principal comprend un conduit de by-pass (23) débouchant d'une part dans la veine fluide en amont du siège (14) et d'autre part à l'intérieur d'une chambre (24) ménagée entre le siège et le corps (2), sur lequel est monté un robinet (21).

Le robinet principal comprend également un siège aval (25) comportant des joints en graphite (26) maintenus en pression élastique contre le boisseau par l'intermédiaire d'un tore métallique (27) ouvert du côté extérieur. Il est à noter que la section du passage délimité par les joints (26) du siège aval (25) est inférieure à la section du passage ménagé par la lèvre déformable (16) du siège amont (14).

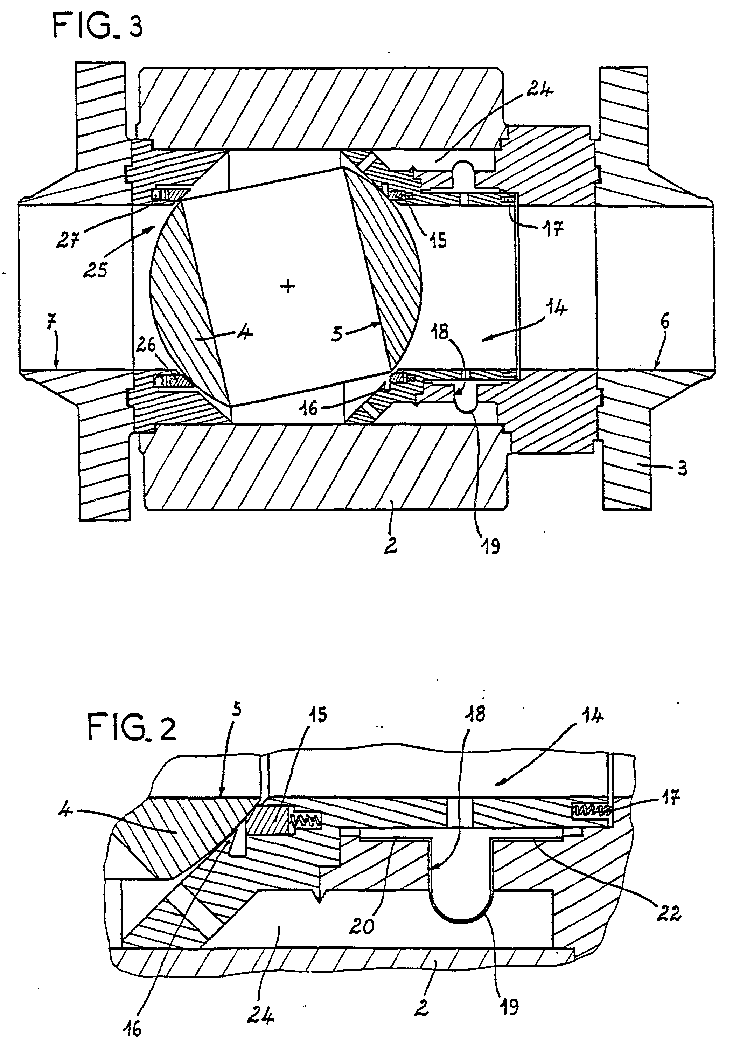

D'un point de vue pratique, le fonctionnement de ce robinet est le suivant : lorsque le boisseau est manœuvré vers sa position de fermeture, la veine fluide commence tout d'abord par être sectionnée totalement au niveau du siège aval, comme cela ressort de la figure 3 alors que la fermeture n'est pas complète au niveau du siège amont. Cela permet d'effectuer la fin de manœuvre sans différence de pression sur le siège métallique amont. La pression dans la chambre (24) du robinet, après fermeture complète, chute progressivement et la différence de pression au niveau du tronçon de soufflet augmente, exerçant ainsi une poussée sur la collerette (18) se traduisant par une forte application du siège sur le boisseau, avec déformation de la lèvre élastique.

Pour réaliser l'ouverture du robinet principal, il convient tout d'abord d'ouvrir le robinet (21) pour permettre, par l'intermédiaire du conduit de by-pass (23) un équilibrage des pressions de part et d'autre du siège (14) et du tronçon de soufflet. Le siège occupe donc une position flottante permettant une manœuvre du boisseau (4) vers la position d'ouverture sans risque de grippage.

Conformément à une variante d'exécution représentée à la figure 4, le boisseau (4) possède une zone de contact avec le siège (14), constituée par une lèvre déformable (28). L'étanchéité de la fermeture résultera donc d'une double déformation respectivement de la lèvre (16) du siège amont (14) et de la lèvre (28) du boisseau sphérique (4).

Comme il ressort de ce qui précède, l'invention apporte une grande amélioration à la technique existante en fournissant un robinet à boisseau sphérique susceptible de travailler à de hautes températures et sous de hautes pressions tout en bénéficiant d'une excellente fiabilité.

Comme il va de soi, l'invention ne se limite pas aux seules formes d'exécution de ce robinet décrites ci-dessus à titre d'exemple ; elle en embrasse, au contraire, toutes les variantes de réalisation.

C'est ainsi notamment que la commande de la rotation du boisseau pourrait être non pas manuelle mais exécutée par un moyen quelconque d'asservissement, par exemple hydraulique, ou pneumatique, électrique... ou que le soufflet (19) pourrait être remplacé par une membrane.

## Revendications

1. Robinet à boisseau tournant sphérique, du type à boisseau arbré dans lequel l'étanchéité est réalisée par appui d'un siège (14) déplaçable dans la direction de la veine fluide, disposé en amont du boisseau (4), et susceptible de travailler à de hautes températures et sous de fortes pressions ; la partie du siège amont (14) formant une surface d'appui axiale pour le fluide forme une collerette (18) sur laquelle prend application la pression de la veine fluide avec interposition d'un tronçon de soufflet (19) ou une membrane métallique, dont une extrémité est fixée avec étanchéité sur le corps (2) du robinet et dont l'autre extrémité est fixée avec étanchéité sur le siège mobile (14), caractérisé en ce que l'extrémité du siège prenant appui sur le boisseau comporte une lèvre métallique (16) déformable élastiquement, des moyens (23, 21) étant prévus, susceptibles d'assurer un équilibrage de la pression, de part et d'autre du siège préalablement à l'ouverture du robinet, et en ce que la section de passage de la zone d'appui du siège aval (25) sur le boisseau (4) est inférieure à la section de passage de la zone d'appui du siège amont (14) sur celui-ci, ce qui a pour but, lors de la fermeture du robinet, de fournir tout d'abord un sectionnement total de la veine fluide sur le siège aval, alors que la fermeture n'est pas encore complète sur le siège amont, ce qui permet d'effectuer la fin de la manœuvre de fermeture sans différence de pression sur le siège amont.

2. Robinet selon la revendication 1, caractérisé en ce que les moyens assurant l'équilibrage de la pression de part et d'autre du siège, préalablement à l'ouverture du robinet, sont constitués par un conduit de by-pass (23) qui, débouchant d'une part dans la veine fluide en amont du siège coulissant, et d'autre part dans la chambre (24) ménagée entre le corps et le siège, est équipé d'un robinet de fermeture (21).

3. Robinet selon l'une quelconque des revendications 1 et 2, caractérisé en ce qu'il est équipé d'un siège aval (25) comprenant des éléments en graphite (26), maintenus en appui élastique contre le boisseau (4) par un élément (27) en forme de tore métallique ouvert sur l'extérieur.

4. Robinet selon l'une quelconque des revendications 1 à 3, caractérisé en ce que le boisseau (4) comprend une lèvre métallique déformable (28) destinée à venir prendre appui contre la lèvre déformable (16) du siège amont.

## Claims

1. A stop-valve with a spherical rotating plug, of the shafted plug type in which pressure-tightness is obtained by supporting a seating (14), dispaceable in the direction of the fluid stream, that is located up-stream from the plug (4) and is capable of working at high temperatures and under heavy pressures ; the upstream portion of the seating (14) that forms an axial support surface for the fluid forms a flange (18) on which the pressure of the fluid stream acts with interposition of a section of bellows (19) or a metallic membrane, one extremity of which is fixed with pressure-tightness to the body (2) of the stop-valve and the other extremity of which is fixed with pressure-tightness to the movable seating (14), characterized in that the extremity of the seating that rests against the plug comprises a metallic lip (16) that is elastically deformable, means (23, 21) being provided that are capable of ensuring a balance of the pressures on either side of the seating prior to the opening of the stop-valve, and in that the passage cross-section of the pressure area of the down-stream seating (25) on the plug (4) is less than the passage cross-section of the pressure area of the up-stream seating (14) on the latter, the purpose of which during closing of the stop-valve is to supply first of all a complete cut-off of the fluid stream at the down-stream seating whereas the cut-off is not yet complete at the up-stream seating, which enables the end of the closing movement to be completed without a difference of pressure on the up-stream seating.

2. A stop-valve according to Claim 1, characterized in that the means that ensure pressure-equilibrium on both sides of the seating prior to opening of the stop-valve consist of a by-pass passage (23) that, opening on one hand into the fluid stream up-stream of the sliding seating and on the other hand into the chamber (24) provided between the body and the seating, is equipped with a closing stop-valve (21).

3. A stop-valve according to either of Claims 1 and 2, characterized in that it is equipped with a down-stream seating (25) comprising graphite units (26), maintained in elastic pressure against the plug (4) by a unit (27) in the form of a metallic torus open to the exterior.

4. A stop-valve according to any of Claims 1 to 3, characterized in that the plug (4) comprises a deformable metallic lip (28) intended to come into pressure-contact against the deformable lip (16) of the up-stream seating.

## Patentansprüche

1. Kugelhahn für hohe Temperaturen und hohe Drücke

mit einem wellengelagerten Absperrglied, dessen Dichtigkeit durch das Abstützen eines in Richtung der Flüssigkeitsströmung verschiebbaren Sitzes (14) bewirkt wird, der stromaufwärts des Absperrglieds (4) angeordnet ist,

wobei derjenige Teil des stromaufwärtigen Sitzes (14), der eine axiale Stützfläche für die Flüssigkeit darstellt, einen Kragen (18) bildet, an dem unter Zwischenfügung eines Saugstücks (19) oder einer Metallmembran der Druck der Flüssigkeitsströmung angreift,

und wobei ein Endbereich des Saugstücks (19) bzw. der Membran unter Abdichtung an dem Körper (2) des Hahns befestigt ist, und der andere Endbereich und der Abdichtung an dem beweglichen Sitz (14) befestigt ist,

dadurch gekennzeichnet,

daß derjenige Endbereich des Sitzes, der sich an dem Absperrglied abstützt, eine elastisch verformbare metallische Lippe (16) aufweist,

daß Mittel (23, 21) vorgesehen sind, die in Vorbereitung des Öffnens des Hahns die Erzeugung eines Gleichgewichts der Drücke zu beiden Seiten des Sitzes ermöglichen,

und daß der Durchgangsquerschnitt der Stützzone des stromabwärtigen Sitzes (25) auf dem Absperrglied (4) kleiner ist als der Durchgangsquerschnitt der Stützzone des stromaufwärtigen Sitzes (14) auf dem Absperrglied,

was zum Ziel hat, beim Schließen des Hahns zunächst eine vollständige Unterbrechung der Flüssigkeitsströmung zu dem stromabwärtigen Sitz zu erzielen, wenn das Schließen an dem stromaufwärtigen Sitz noch nicht vollständig ist, wodurch die Beendigung der Schließbetätigung möglich ist, ohne daß auf den stromaufwärtigen Sitz eine Druckdifferenz einwirkt.

2. Hahn nach Anspruch 1, dadurch gekennzeichnet, daß die Mittel, die in Vorbereitung des Öffnens des Hahnas das Druckgleichgewicht zu beiden Seiten des des Sitzes ermöglichen, aus einer Umgehungsleitung (23) bestehen, die einerseits in der Flüssigkeitsströmung stromaufwärts des Sitzes und andererseits in der Kammer (24) münden, die zwischen dem Körper und dem Sitz angebracht ist, wobei diese Umgehungsleitung mit einem Absperrhahn (21) ausgestattet ist.

3. Hahn nach Anspruch 1 oder 2, dadurch gekennzeichnet, daß er mit einem stromabwärtigen Sitz (25) mit Graphitelementen (26) ausgestattet ist, die sich durch ein Element (27) in Form eines außen offenen metallischen Torus elastisch gegen das Absperrglied (4) abstützen.

4. Hahn nach einem der Ansprüche 1 bis 3, dadurch gekennzeichnet, daß das Absperrglied (4) eine verformbare metallische Lippe (28) aufweist, die sich gegen die verformbare Lippe (16) des stromaufwärtigen Sitzes abstützen kann.

## FIG.1

## FIG.4

FIG_3

FIG_2